# EUROPÄISCHE PATENTANMELDUNG

(11) **EP 0 964 173 A1**
(43) Veröffentlichungstag der Anmeldung: **15.12.1999**
(21) Anmeldenummer: 99110822.6
(22) Anmeldetag: 05.06.1999
(51) Int. Cl.: F16C 25/08

(54) **Verfahren zur Veränderung der Einspannverhältnisse zwischen einem Wellenlager und einem Drehteil sowie Wellenlager**

(30) Priorität: 13.06.1998 DE 19826172
(71) Anmelder: DaimlerChrysler AG, 70567 Stuttgart (DE)
(72) Erfinder: Schnur, Jürgen, 71254 Ditzingen (DE); Tomaschko, Silvia Dr., 89075 Ulm (DE)

(57) **Zusammenfassung**

Die Erfindung betrifft ein Verfahren zur Veränderung der Einspannverhältnisse zwischen einem Wellenlager (3) und einem Drehteil (2), welches drehbar in dem Wellenlager (3) gelagert ist, und bei dem die Rotationsachse des Drehteils (2) achsgleich zur Rotationsachse des Wellenlagers (3) angeordnet wird sowie ein entsprechendes Wellenlager (3). Das Wellenlager (3) weist eine Radialverstelleinheit (1) auf, mit dem die Einspannverhältnisse des Drehteils (2) in dem Wellenlager (3) veränderbar sind. Diese Veränderung erfolgt durch eine reversible Änderung der radialen Erstreckung der Radialverstelleinheit (1) und/oder durch eine reversible Änderung des Anpreßdrucks an das Drehteil (2).

## Beschreibung

Die Erfindung betrifft ein Verfahren zur Veränderung der Einspannverhältnisse zwischen einem Wellenlager und einem Drehteil, welches drehbar in dem Wellenlager gelagert ist, und bei dem die Rotationsachse des Drehteils achsgleich zur Rotationsachse des Wellenlagers angeordnet wird, sowie ein Wellenlager für ein Drehteil, das in einem Wellenlager drehbar gelagert ist und dessen Rotationsachse achsgleich zur Rotationsachse des Wellenlagers angeordnet ist, gemäß den Oberbegriffen des Anspruch 1 bzw. 6.

Im Maschinenbau sind Drehteile im allgemeinen unter Zuhilfenahme von Wellen- bzw. Drehlagern wie Kugellager, Kegelrollenlager, Gleitlager usw. drehbar gehaltert. Bei den Drehteil/Wellenlager-Verbindungen können Veränderungen der Einspannverhältnisse, wie bspw. ein Spiel, auftreten. Die Veränderungen sind i.a. nicht statisch, sondern können sich insbesondere durch thermische Effekte verändern. Mit der Veränderung der Einspannverhältnisse des Drehteils in dem Wellenlager sind verschiedene Effekte verbunden. So verändern sich insbesondere die Eigenfrequenzen und/oder die Schwingungsamplituten des Drehteils. Bislang wird ein Ausgleich der auftretenden Veränderungen dadurch erreicht, daß die Drehteil/Wellenlager-Verbindung insbesondere durch eine Feder oder durch eine Materialelastizität vorgespannt wird, wobei die Vorspannung zum Teil auf Lagerschalen wirkt.

Derartige Ausgleichsvorrichtung sind bspw. aus der DE 195 41 245 A1, der DE 38 10 448 C2, dem DE 93 01 334 U1 oder der DE 31 23 590 A1 bekannt.

Die Aufgabe der Erfindung ist es, ein Verfahren anzugeben, mit dem die Veränderungen der Einspannverhältnisse möglichst weitgehend verringert und vorzugsweise zusätzlich noch gezielt verändert werden können.

Die Aufgabe wird erfindungsgemäß mit einem Verfahren mit den Verfahrensschritten des Anspruchs 1 bzw. mit einem Wellenlager mit den Merkmalen des Anspruchs 6 gelöst. Durch die gezielte und reversible Änderung der radialen Erstreckung einer Piezoelemente aufweisenden Radialverstelleinheit bzw. des auf das Drehteil radial einwirkenden Anpreßdrucks, können die Einspannverhältnisse während des Betriebs durch einen gezielten Eingriff von außen verändert werden. Bei der Radialverstelleinheit erfolgt der Eingriff durch das Anlegen einer elektrischen Spannung. Auf die genannte Weise kann bspw. ein Spiel, das sich aufgrund von Temperatureinflüssen verändert, während des Betriebs des Drehteils erfolgen. Sinnvoll ist dies bspw. für einen Spielausgleich.

Ferner kann die Erfindung auch zum Zwecke der Veränderung der Resonanz- bzw. Eigenfrequenzen bei der Übertragung bzw. Einleitung von Schwingungen verwendet werden. Zur Übertragung von Schwingungen zwischen Bauteilen bzw. zur Einleitung von Schwingungen von einem Bauteil in ein anderes Bauteil sind die jeweiligen Resonanzfrequenzen wichtig. Der mathematische Zusammenhang dieser frequenzabhängigen Energie- bzw. Schwingungs-Übertragung wird Übertragungsfunktion genannt.

In besonderer Weise kann mit der Erfindung durch eine Veränderung der Einspannungsverhältnisse bspw. die Werte der Eigenschwingungen Drehteils und damit die betreffende Übertragungsfunktion verändert werden. Durch die Veränderung der Übertragungsfunktion ist die Weiterleitung von Schwingungen, also der übertragbaren Energie, die von dem Drehteil kommen, in ein anderes Bauteil verändert, insbesondere zumindest vermindert.

Eine Verwendung dieses Verfahrens bzw. dieser Vorrichtung ist zweckmäßigerweise bei Drehteilen von Elektromotoren wie insbesondere Rotoren aber auch in Flugzeugtriebwerken, bspw. Propeller oder Düsentriebwerken gegeben.

In bevorzugter Weise ist der Einsatz die Erfindung auch bei einer Kurbel- und/oder Nockenwelle einer Brennkraftmaschine, vorzugsweise eines Diesel- oder Benzinmotors als Drehteil zweckmäßig, da hier dann auf einfache Weise die eingeleiteten Schwingungen und hiervon insbesondere die Schallemission innerhalb einer Fahrgastzelle einer brennkraftbetriebenen Fahrzeuges beeinflußt werden kann. Vorzugsweise erfolgt hier die Beeinflussung der vom Betreiber eines Fahrzeuges insbesondere als störend wahrnehmbaren und zumindest zum Teil vom Motor kommenden Geräuschpegels am Ort des Entstehens und nicht wie bislang üblich, erst am Ort der Wahrnehmung durch den Betreiber. Hierdurch ist in günstiger Weise u.a. der Aufwand hinsichtlich der Steuerelektronik und des apparativen Aufbaus (Mikrophon, Lautsprecher und dgl.) verringert.

Sinnvolle Ausgestaltungen der Erfindung sind den Unteransprüchen entnehmbar. Im übrigen wird die Erfindung anhand von in den Zeichnungen dargestellten Ausführungsbeispielen näher erläutert. Dabei zeigt
- Fig. 1: ein Wellenlager mit innenseitig angeordneter zweiteiliger Radialverstelleinheit,
- Fig. 2: ein Wellenlager mit innenseitig angeordneter dreiteiliger Radialverstelleinheit,
- Fig. 3: ein Wellenlager mit außenseitig angeordneter einteiliger Radialverstelleinheit,
- Fig. 4: eine Kurbelwelle mit mehreren erfindungsgemäßen Wellenlagern,
- Fig. 5: eine Detailzeichnung eines stirnseitig in einem umgebenden Bauteil 7 gehalterten Drehteils mit stirnseitig angeordneter Radialverstelleinheit,
- Fig. 6: eine Radialverstelleinheit, die in der Art einer Dichtung mit integrierten Piezoelementen ausgeführt ist,
- Fig. 7: eine Radialverstelleinheit, die in der Art einer Dichtung mit integrierten und orientierten Piezoelementen ausgeführt ist und
- Fig. 8: eine Radialverstelleinheit und deren Ausschnittsvergrößerung, wobei die Radialverstelleinheit in der Art einer Dichtung mit integrierten und orientierten Piezoelementen sowie mit integrierten Kontakten ausgeführt ist.

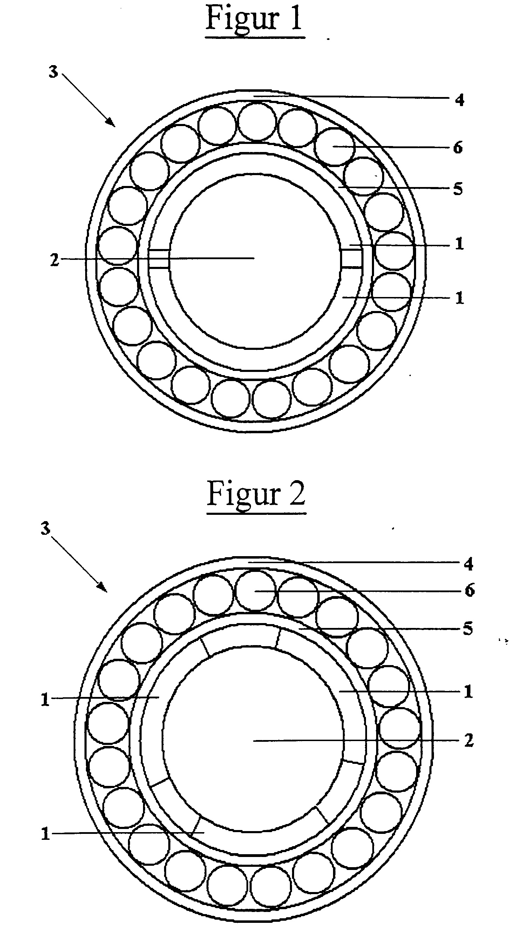

In Figur 1 ist ein Wellenlager 3 in der Art eines Kugelrollenlagers dargestellt, wobei die Erfindung nicht auf Rollenlager beschränkt ist, sondern vielmehr alle möglichen Wellenlager, wie bspw. Rollen-, Wälz- oder Gleitlager und dgl., betrifft. Das Wellenlager nach Figur 1 weist eine Außenschale 4, eine Innenschale 5, eine innenseitig der Innenschale 5 angeordnete Radialverstelleinheit 1 sowie zwischen der Außenschale 4 und der Innenschale 5 rollbar angeordnete Kugeln 6 auf.

Die Radialverstelleinheit 1 wird von zwei als Halbschalen ausgebildete Piezolemente gebildet. Die halbschaligen Piezoelemente der Radialverstelleinheit 1 sind voneinander beabstandet auf der Innenseite der Innenschale 5 angeordnet, so daß sie im Ruhezustand insbesondere spielfrei an der Außenfläche des Drehteils 2 anliegen.

Die halbschaligen Piezoelemente der Radialverstelleinheit 1 werden in günstiger Weise dadurch elektrisch kontaktiert, daß an die Welle auf Masse und die Innenschale 5 des Wellenlagers 3 das entgegengesetzte, vorzugsweise positive Potential angelegt wird. Vorzugsweise wird an das gesamte Wellenlager 3 das positive Potential angelegt, wobei das Wellenlager 3 gegenüber seinem aufnehmenden Bauteil 7 und seiner sonstigem Umgebung elektrisch isoliert sein sollte.

Durch die elektrische Kontaktierung des Wellenlagers 3 können die halbschaligen Piezoelemente der Radialverstelleinheit 1 durch Anlegen einer elektrischen Gleichspannung radial gestreckt werden, wodurch sich der Anpreßdruck an die Welle und damit die zuvor vorliegenden Einspannverhältnisse ändern.

Mit der Änderung der Einspannverhältnisse ist u.a. eine Verstimmung der Eigenschwingungen des Drehteils 2 verbunden. Durch die Veränderung der Geometrie der halbschaligen Piezoelemente der Radialverstelleinheit 1 kann bspw. auch ein ggf. auftretendes Spiel ausgeglichen werden.

Desweiteren können die halbschaligen Piezoelemente der Radialverstelleinheit 1 bei einer im Drehteil 2 auftretenden Schwingung durch das Anlegen einer Wechselspannung zu einer Sekundär-Schwingung erregt werden. Die Sekundär-Schwingung kann mit der auftretenden Schwingung, insbesondere einer Eigenschwingung des Drehteils 2 interferiert werden, wodurch die auftretende Schwingung verändert und insbesondere gedämpft wird.

Die Sekundär-Schwingung wird zweckmäßiger Weise in Abhängigkeit von der auftretenden Schwingung verändert. Hierzu ist es sinnvoll, die auftretenden Schwingung zu aufzunehmen, mittels eines mathematischen Algorithmus - bspw. einer Fourier-Transformation - zu analysieren und dadurch mit eentsprechend generierten Datensätzen die halbschaligen Piezoelemente der Radialverstelleinheit 1 zu einer entsprechenden Sekundär-Schwingung zu erregen.

Auf eine aufwendige Aufnahme- und/oder Auswerteelektronik für die auftretenden Schwingung kann in besonderer Weise verzichtet werden, wenn die Datensätze zur Steuerung der Einspannverhältnisse und/oder der Sekundär-Schwingung einem vorzugsweise elektronischen Datenspeicher, in dem zuvor entsprechend exemplarisch ermittelte Datensätze niedergelegt sind, entnommen werden. Insbesondere erfolgt die Entnahme eines jeweiligen Datensatzes in Abhängigkeit eines mit dem Betrieb des Drehteils 2 korrelierten Parameters.

In andere Fällen ist es zweckmäßig, die auftretenden Schwingungen zu ermitteln und die Datensätze für die Sekundär-Schwingung entsprechend der ermittelten Schwingung auszuwählen.

Handelt es sich bei dem Drehteil 2 um ein rotierendes Drehteil, insbesondere um eine Nocken- und/oder Kurbelwelle eines Verbrennungsmotors, ist es sinnvoll, die Einspannverhältnisse und/oder die Sekundär-Schwingungen in Abhängigkeit insbesondere der Drehzahl und/oder des Kurbel- bzw. Nockenwellenwinkels des Verbrennungsmotors zu verändern.

In sinnvoller Weise kann die radiale Verstellung der Radialverstelleinheit 1 und die künstliche Generierung der Sekundär-Schwingung miteinander verbunden werden, wodurch die Vorrichtung bzw. das erfingsgemäße Verfahren flexibler wird.

Die Kombination dieser beiden Verwendungsmöglichkeiten eines erfindungsgemäßen Wellenlagers 3 kann dadurch erfolgen, daß als elektrische Spannung eine Wechselspannung mit einer zusätzlichen Gleichspannung( einer sogenannten Offset-Spannung) verwendet wird.

Die Offset-Spannung regelt die radiale Erstreckung bzw. den radialen Anpreßdruck der halbschaligen Piezoelemente der Radialverstelleinheit 1, während die Wechselspannung die Piezoelemente der Radialverstelleinheit 1 zu der Sekundär-Schwingung erregt. Dadurch führen die halbschaligen Piezoelemente der Radialverstelleinheit 1 eine Sekundär-Schwingung aus, deren Nullpunkt am demjenigen Ort angeordnet ist, der durch die Offset-Spannung festgelegt ist.

Im Falle eines innen- und außenseitig fest eingespannten Wellenlagers 3 kann sich ein Piezoelement der Radialverstelleinheit 1 allenfalls nur gering körperlich ausdehnen, so daß es sich in diesem Fall bei den Sekundär-Schwingungen um Druck-Schwingungen, also um radiale Kraftflüsse handelt, die auf das Drehteil 2 übertragen werden. Hierdurch werden ebenfalls die Einspannverhältnisse des Drehteils 2 verändert.

Des weiteren können die Einspannverhältnisse und/oder die Sekundär-Schwingungen in besonderer Weise auch in Abhängigkeit von der Temperatur des Drehteils 2 und/oder des Wellenlagers 3 verändert werden.

In Figur 2 ist ein weiteres Wellenlager 3 dargestellt, das demjenigen nach Figur 1 ähnlich ist. Der Unterschied zwischen diesen beiden Wellenlagern besteht darin, daß hier die Radialverstelleinheit 1 hier drei kreisschalenförmige Piezoelemente aufweist.

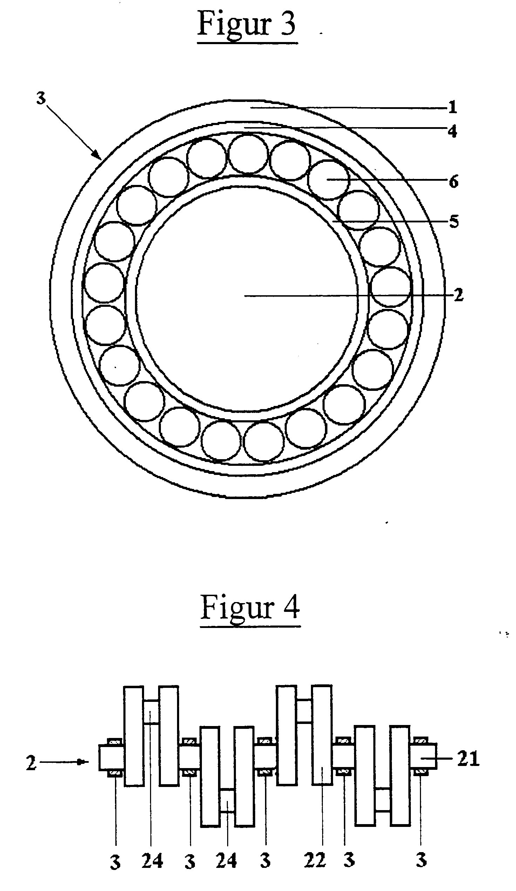

In Figur 3 ist ein weiteres Wellenlager 3 dargestellt. Bei diesem Wellenlager 3 ist die Radialverstelleinheit 1 an der Außenfläche der Außenschale 4 angeordnet und weist ein ringförmiges Piezoelement auf, das ggf. auch eine axial verlaufenden Fuge (nicht eingezeichnet) aufweisen kann.

Das Wellenlager 3 wird an dem Drehteil 2 derart angeordnet, daß seine Symmetrieachse gleichachsig zu der Rotationsachse des Drehteils 2 verläuft. Des weiteren wird das Wellenlager 3 an seinen beiden Außenflächen abgestützt; d.h. die Innenseite der Innenschale 5 liegt an der Außenfläche des Drehteils 2 und die Ringaußenseite der Piezoelemente der Radialverstelleinheit 1 an einem es zumindest bereichsweise umgebenden Bauteil 7 an.

Für die elektrischen Kontaktierung wird die der Außenfläche der Außenschale 4 zugewandte Ringinnenseite des Piezoelements der Radialverstelleinheit 1 auf Masse und die Ringaußenseite des Piezoelements der Radialverstelleinheit 1 an das positive Potential gelegt.

Tritt ein radiales Spiel zwischen dem das Wellenlager 3 umgebenden Bauteil 7 und/oder zwischen dem Wellenlager 3 und dem Drehteil 2 auf, wird eine elektrische Spannung an das Piezoelement der Radialverstelleinheit 1 angelegt. Durch die elektrische (Gleich-) Spannung verändert sich die radiale Erstreckung des Piezoelements der Radialverstelleinheit 1. Dadurch wird das Spiel zumindest verringert. Sinnvollerweise wird die elektrische Spannung so gewählt, daß die Veränderung der radialen Erstreckung dem Maß des Spiel entspricht.

Ist das Wellenlager 3 an seinen beiden achsparallelen Außenflächen spielfrei angelegt, kann sich die radiale Erstreckung des Piezoelements der Radialverstelleinheit 1 allenfalls minimal ändern. In diesem Fall wird der Druck auf das Drehteil 2 und das das Wellenlager 3 umgebende Bauteil 7 erhöht sowie die Einspannverhältnisse geändert.

Weist die elektrische Spannung einen Wechselspannungsanteil auf, so können hierdurch - wie schon zuvor beschrieben - Sekundär-Schwingungen in Form von mit großen Kräften verbundene Druck-Schwingungen auf das Drehteil 2 und auf das das Wellenlager 3 umgebende Bauteil 7 übertragen werden.

In Figur 4 ist als Drehteil 2 eine Kurbelwelle mit daran angeordneten Wellenlagern dargestellt. Die Kurbelwelle weist zwei axial außenseitig angeordnete Hauptlagerzapfen 21 auf. Einem Hauptlagerzapfen 21 folgen in Richtung der Rotationsachse zwei Kurbelwangen 22, zwischen denen ein Lagerzapfen 23 angeordnet ist. Der zweiten Kurbelwange 22 nachfolgend ist ein Pleullagerzapfen 24 angeordnet, der radial zu Rotationsachse der Kurbelwelle versetzt ist. Anschließend folgt wieder eine Kurbelwange 22, ein Lagerzapfen 23, eine Kurbelwange 22, ein Pleullagerzapfen 23 usw.. Die erfindungsgemäßen Wellenlager 3 sind an den Hauptlagerzapfen 21 und an den Lagerzapfen 23 angeordnet. In bevorzugter Weise sind die Wellenlager 3 getrennt voneinander ansteuerbar, wodurch die Variationsmöglichkeiten einer durch die Wellenlager erfolgenden Einflußnahme auf das Drehteil erhöht sind.

Anstelle von Rollenlagern ist es bspw. bei einer Kurbelwelle sinnvoll zumindest an den Lagerzapfen sogenannte Gleitlager zu verwenden. In diesem Fall können hier die Piezoelemente gleich die Gleitlager bilden. Im zweckmäßiger Ausgestaltung können diese als Gleitlager und gleichzeitig als Radialverstelleinheit 1 verwendeten Piezoelemente auf ihrer der Welle zugekehrten Oberfläche eine Gleitschicht aufweisen. Die Gleitschicht wiederum weist sinnvollerweise ein Trockenschmiermittel, bevorzugt Molydänsulfid (MoS₂) und besonders bevorzugt Borsäure (H₃BO₃), auf.

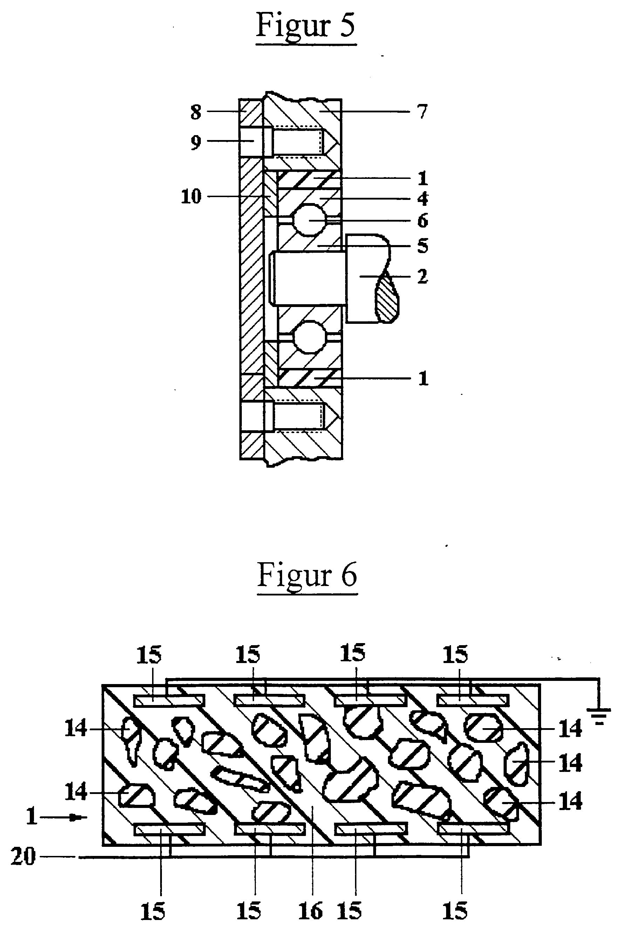

In Figur 5 ist eine Detailzeichnung eines stirnseitig in einem umgebenden Bauteil 7 gehalterten Drehteils 2 dargestellt. Das Wellenlager 3 ist am stirnseitigen Endbereich des Drehteils 2 angeordnet. Es entspricht der Bauweise des Wellenlagers 3 nach Figur 3, so daß auf das Wellenlager 3 nicht mehr genauer eingegangen wird. Im Bereich der Stirnseite des Drehteils 2 ist auf das Wellenlager 3 ein ringförmiger Konterring 10 angeordnet, der die Außenschale 4 und die Radialverstelleinheit 1 überdeckt. Der Konterring 10 liegt mit einer seiner beiden Radialflächen sowohl an der Radialverstelleinheit 1 als auch an der Außenschale 4 des Wellenlagers 3 berührend an. An der gegenüberliegenden Radialfläche des Konterrings 10 liegt an dem Konterring 10 eine Abschlußplatte 8 berührend an. Die Abschlußplatte 8 ist durch die Schrauben 9 mit dem umgebenden Bauteil 7 verschraubt. Durch diese Konstruktion ist die Radialverstelleinheit 1 und das Wellenlager 3 über den Konterring 10 gegen die Albschlußplatte 8 in axialer Richtung und damit auch gegenüber dem umgebenden Bauteil 7 abgestützt.
Anstelle der in den Figuren 1 bis 3 dargestellten Radialverstelleinheiten 1, die immer vollständig aus Piezoelementen gebildet sind, kann in besondere Weise auch als Dichtung ausgeführt sein, in der die Piezoelemente 14, 14', 14'' in einer Kunststoff-Matrix 6 angeordnet sind. Entsprechende Ausführungsbeispiele dieser (aktiven) Dichtungen sind in den Figuren 6 bis 8 dargestellt. Bei diesen Dichtungen ist von Vorteil, daß derartige Radialverstelleinheiten 1 neben der Dichtwirkung auch eine Schutzwirkung auf die Piezoelemente 14, 14', 14'' ausüben, die auf die sie umgebende Kunststoff-Matrix 16 der Dichtung zurückzuführen ist.

Figur 6 zeigt eine Dichtung einer Radialverstelleinheit 1 mit einer Matrix 16 aus vorzugsweise elektrisch leitendem Kunststoff, in den mehrere Piezoelemente 14 in beliebiger Größe, Orientierung und körperlicher Gestaltung eingebettet sind. Eine derartige Anordnung wird i.a. als 0-3-Piezokeramik-Polymer-Komposit bezeichnet. Im Bereich der Wandung der Dichtung sind günstigerweise elektrische Kontakte 15 angeordnet, die durch elektrische Steuerleitungen 20 mit einer Steuereinheit (nicht dargestellt) verbunden sind.

Durch die elektrischen Kontakte 15 können die einzelnen Piezoelemente 14 zum einen gezielt angesteuert werden und zum anderen ist es möglich, eine elektrische Spannung abzugreifen, die z.B. dadurch entstehen kann, das von einem Drehteil 2 übertragenen Schwingungen einen Drucks auf die Piezoelemente 14 ausüben und diese deformieren.

In einem einfachen Fall kann bei einer Dichtung auch auf die elektrischen Kontakte 15 verzichtet werden. In diesem Fall führt eine auf übertragene Schwingungen zurückgehende Deformation der Piezoelemente 14 zwar auch zu einer elektrischen Spannung. Die elektrische Spannung wird hier dann aber in eine Erwärmung der Kunststoff-Matrix 16 der Dichtung umgesetzt, womit das System ebenfalls gedämpft ist.

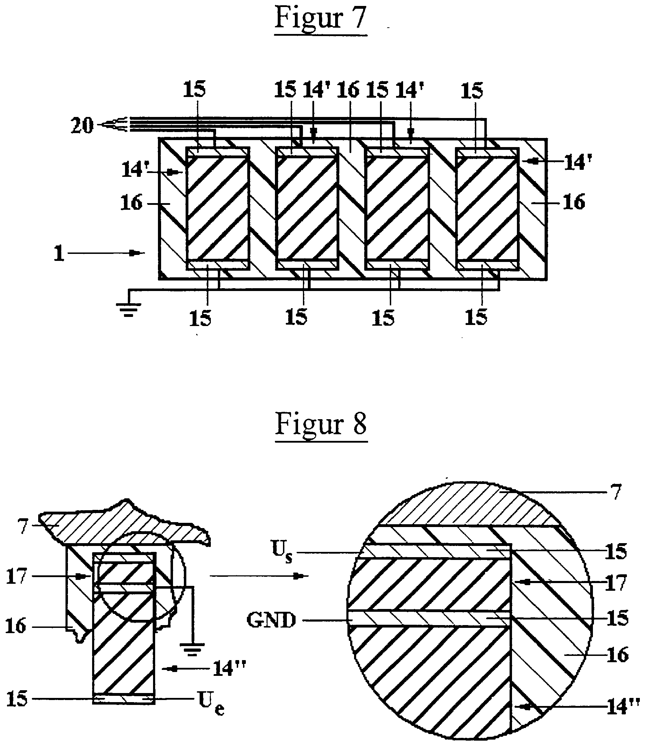

In Figur 7 ist eine weitere aktive Dichtung einer Radialverstelleinheit 1 mit einer Kunststoff-Matrix 16 dargestellt, in der mehrere Piezoelemente 14' eingebettet sind. Im Gegensatz zu dem Ausführungsbeispiel nach Figur 6 sind diese Piezoelemente 14' von bestimmter Größe und Form und zusätzlich orientiert angeordnet. Eine derartige Anordnung wird i.a. als 1-3-Piezokeramik-Polymer-Komposit bezeichnet.

Die einzelnen Piezoelemente 4' können - je nach Vorteile im jeweiligen Einsatzfall - bspw. massiv sein und/oder aus mehreren aufeinander gelegten Schichten einzelner Lagen von insbesondere folien- und/oder scheibenartigen Piezokeramiken gebildet sein. Gegenüber der massiven Bauweise von Piezoelementen verringert sich bei den Multi-layer-Systemen bei gleicher Beanspruchung und gleicher aktiver Fläche - die Spannung, während sich die Strom erhöht.

Im Bereich der Wandung der Dichtung sind ebenfalls elektrische Kontakte 15 angeordnet, die gleichfalls durch elektrische Steuerleitungen 20 mit einer Steuereinheit (nicht dargestellt) verbunden sind. Im Unterschied zu der Dichtung nach Figur 6 ist bei der Dichtung nach Figur 7 ein jedes Piezoelement 14' einzeln elektrisch kontaktiert und somit auch getrennt einzeln ansteuerbar.

Über die elektrischen Kontakte 15 können die einzelnen Piezoelemente 14' gezielt zu Sekundär-Schwingungen mit gewünschten Frequenzen und Amplituden erregt werden. Die Sekundär-Schwingungen können mit den von dem Drehteil 2 her übertragenen Schwingungen interferiert und/oder diesen überlagert werden. Im Falle einer negativen Interferenz können die zuvor ohne diese Beeinflussung wahrgenommenen Geräusche zumindest verringert werden.

Die Piezoelemente 14' der Dichtung einer Radialverstelleinheit 1 sind vorzugsweise in der Art von Piezostaks ausgebildet und/oder lamellenartig und insbesondere fluchtend hintereinander in der Dichtung angeordnet.

Bei der Herstellung der Dichtung werden die so angeordneten Piezoelemente 14' sinnvollerweise vor dem Einlassen in den die Matrix 16 der Dichtung bildenden Kunststoff noch elektrisch kontaktiert. Damit die Dichtung einer Radialverstelleinheit 1 auch weiterhin ihren üblichen Zweck erfüllt, ist der die Matrix 16 bildende Kunststoff bevorzugt aus einem Polymer und insbesondere aus einem Elastomer gefertigt.

In Figur 8 ist eine aktive Dichtung einer Radialverstelleinheit 1 mit einer Kunststoff-Matrix 16 dargestellt, in der mehrere Piezoelemente 14'' mit zugeordneten piezoelektrischen Sensoren 17 eingebettet sind. Die Piezoelemente 14'' gleichen hinsichtlich der Bauart und der orientierten Anordnung weitgehend denen nach Figur 7.

Allerdings ist ihnen in Richtung ihrer aktiven Achse ein vorzugsweise piezoelektrischer Sensor 17 nachgeordnet. Der Sensor 17 weist einen gemeinsamen und einen zusätzlichen elektrischen Kontakt 15 auf. Der gemeinsame Kontakt 15, der zwischen dem Piezoelement 14'' und dem Sensor 17 angeordnet ist, ist zweckmäßigerweise geerdet bzw. auf ein elektrisches Null-Potential gelegt.

Über die elektrischen Kontakte 15 können die einzelnen Piezoelemente 14'' gezielt zu Sekundär-Schwingungen mit gewünschten Frequenzen und Amplituden erregt werden. Die Sekundär-Schwingungen können mit den von dem Drehteil 2 übertragenen Schwingungen interferiert und/oder diesen überlagert werden.

In vorteilhafter Weise kann bei einer derartigen Dichtung einer Radialverstelleinheit 1 mit dem Sensor 17 eine nach gewünschter Anregung der Piezoelemente 14'' verbleibende Restschwingung ermittelt und entsprechend gesteuert werden. Mit der zugehörigen Elektronik bildet also dieses Piezo-/Sensorelement 4'' einen Regelkreis aus. Aus diesem Grund ist es u.a. günstig, den Sensor 17 in Kraftflußrichtung und/oder parallel zu der Auslenkungsrichtung der zu erwartenden Amplitude bzw. der Moden der übertragenen Schwingung nach dem erregbaren Piezoelement 14'' anzuordnen.

Durch die einzelne elektrische Kontaktierung eines jeden Sensors 17 und der jeweiligen Piezoelemente 14'' kann der Ermittlung der Restschwingung und die Einleitung der Sekundär-Schwingung mit einer guten Auflösung und Flexibilität erfolgen.

## Patentansprüche

1. Verfahren zur Veränderung der Einspannverhältnisse zwischen einem Wellenlager und einem Drehteil, welches drehbar in dem Wellenlager gelagert ist, und bei dem die Rotationsachse des Drehteils achsgleich zur Rotationsachse des Wellenlagers angeordnet wird,
**dadurch gekennzeichnet,**
■ daß die axialen und radialen Einspannverhältnisse zwischen dem Wellenlager (3) und einem drehbar in dem Wellenlager (3) gehaltenen Drehteils (2), insbesondere einer Welle, der Maschine verändert werden,
■ daß die Einspannverhältnisse durch eine reversible Änderung der radialen Erstreckung und/oder des Anpreßdrucks an das Drehteil (2) einer aus einem piezoelektrisch aktiven Material gefertigten Radialverstelleinheit (1) verändert werden,
■ daß die Einspannverhältnisse zwischen dem Drehteil (2) und dem Wellenlager (3) gesteuert verändert werden,
■ daß die Einspannverhältnisse zwischen dem Drehteil (2) und dem Wellenlager (3) in Abhängigkeit von Schwingungen, die am Drehteil (2) auftreten, verändert werden und
■ und daß durch die Veränderung der Einspannverhältnisse die zwischen Drehteil (2) und dem Wellenlager (3) bzw. einem das Wellenlager berührenden Bauteils (7) vorliegende Übertragungsfunktion der Schwingungen, insbesondere der Schallwellen erzeugenden Schwingungen, verändert wird.

2. Verfahren nach Anspruch 1,
**dadurch gekennzeichnet,**
daß bei einem Drehteil (2) einer Brennkraftmaschine, insbesondere eines Verbrennungsmotors die Einspannverhältnisse in Abhängigkeit eines Parameters, insbesondere der Drehzahl und/oder dem Kurbelwellenwinkel des Verbrennungsmotors verändert werden.

3. Verfahren nach Anspruch 1,
**dadurch gekennzeichnet,**
daß die Einspannverhältnisse in Abhängigkeit der Temperatur des Drehteils (2) und/oder des Wellenlagers (3) verändert werden.

4. Verfahren nach Anspruch 1,
**dadurch gekennzeichnet,**
daß die Daten zur Steuerung der Einspannverhältnisse einem in einem vorzugsweise elektronischen Datenspeicher niedergelegten Datensatz entnommen werden.

5. Verfahren nach Anspruch 1,
**dadurch gekennzeichnet,**
daß durch die Änderung der Einspannverhältnisse die Eigenfrequenz des Drehteils (2) verändert wird.

6. Wellenlager für ein Drehteil, das in einem Wellenlager drehbar gelagert ist und dessen Rotationsachse achsgleich zur Rotations- bzw. Symmetrieachse des Wellenlagers angeordnet ist,
**dadurch gekennzeichnet,**
daß das Wellenlager (3) eine Radialverstelleinheit (1) aufweist, daß die effektive radiale Erstreckung der Radialverstelleinheit (1) und/oder der Anpreßdruck an das Drehteil (2) im Bereich des zu haltenden Drehteils (2) zumindest zwischen zwei Maßen reversibel veränderbar ist, und daß die Radialverstelleinheit (1) aus einem piezoelektrisch aktiven Material gefertigt ist.

7. Wellenlager nach Anspruch 6,
**dadurch gekennzeichnet,**
daß die Radialverstelleinheit (1) nächstliegend zum Außenumfang des Drehteiles (2) angeordnet ist.

8. Wellenlager nach Anspruch 6,
**dadurch gekennzeichnet,**
daß die Radialverstelleinheit (1) an dem Außenumfang des Wellenlagers (3) angeordnet ist.

9. Wellenlager nach Anspruch 6,
**dadurch gekennzeichnet,**
daß die Radialverstelleinheit (1) als geteilte Schale ausgebildet ist.

10. Wellenlager nach Anspruch 6,
**dadurch gekennzeichnet,**
daß das Drehteil (2) ein rotierendes Systemelement, vorzugsweise eine Kurbelwelle oder eine Nockenwelle einer Brennkraftmaschine, insbesondere eines Diesel- oder Benzinmotors ist.

11. Wellenlager nach Anspruch 6,
**dadurch gekennzeichnet,**
daß das Drehteil (2) ein rotierendes Systemelement, vorzugsweise eine Welle bzw. ein Rotator eines Elektromotors ist.

12. Wellenlager nach Anspruch 6,
**dadurch gekennzeichnet,**
daß das Drehteil (2) ein rotierendes Systemelement eines Propellers oder einer Düsenantriebs ist.
